# FASCICULE DE BREVET EUROPEEN

(11) **EP 1 386 777 B1**
(45) Date de publication et mention de la délivrance du brevet: **21.09.2005**
(21) Numéro de dépôt: 03356061.6
(22) Date de dépôt: 10.04.2003
(51) Int. Cl.: B60N 2/14, B60R 22/26, B60R 22/48

(54) **Sécurité pour siège de véhicule étant rotatif et calable dans au moins deux positions**
Sicherheitsvorrichtung für einen drehbaren und in mindestens zwei Positionen verriegelbaren Fahrzeugsitz
Safety device for a rotatable vehicle seat being locakble in at least two positions

(30) Priorité: 01.08.2002 FR 0209958
(43) Date de publication de la demande: 04.02.2004
(73) Titulaire: GRUPO ANTOLIN-INGENIERIA, S.A., 09080 Burgos (ES)
(72) Inventeur: Chabanne, Jean-Pierre, 89710 Champvallon (FR); Baert, Patrick, 42170 Saint-Just Saint-Rambert (FR); Faye, Patrick, 42210 Montrond les Bains (FR)
(74) Mandataire: Maureau, Philippe

(56) Documents cités:
- WO-A-92/18348
- US-A- 3 338 622
- US-A- 3 740 091
- US-A- 4 191 353
- US-A- 5 853 221
- US-A- 5 909 926

## Description

L'invention est relative à un dispositif de sécurité pour siège de véhicule, rotatif et calable dans au moins deux positions angulaires.

Elle concerne plus particulièrement les sièges dans lesquels la structure d'assise est montée libre en rotation autour d'un axe vertical et par rapport à un piètement et porte, d'une part et dans son fond, des moyens de verrouillage aptes à la caler en rotation dans au moins deux positions opposées, respectivement, face à la route et dos à la route, et, d'autre part, et sur l'un de ses flancs, une gâche pour le pêne d'une ceinture de sécurité intégrée portée par le siège, lesdits moyens de verrouillage étant soumis à des moyens à ressort les rappelant en position de verrouillage et étant reliés à un levier de commande de déverrouillage articulé sous la structure d'assise.

Dans les sièges actuels, le passager peut attacher la ceinture de sécurité alors même que la structure d'assise n'est pas dans l'une ou l'autre de ses positions verrouillées, et par exemple, avec le siège tourné à 90° par rapport à la direction de déplacement. Dans cette position, en cas de choc longitudinal, la ceinture de sécurité remplit d'autant plus mal sa fonction de protection du passager que, à l'énergie cinétique communiquée transversalement à ce dernier, s'ajoute un mouvement de rotation jusqu'à ce que la structure d'assise parvienne dans une position où les moyens de verrouillage la cale par rapport au piètement. Il en résulte que le passager est soumis à un mouvement complexe de translation et rotation qui ne peut pas être totalement contrôlé par la ceinture et qui peut donc être à l'origine de blessure ou traumatisme divers.

Le document WO9218348 décrit un siège pivotant autour d'un axe vertical dont la rotation peut être libérée par une cinématique complexe embarqué dans le piètement du siège. Cette cinématique comprend un bras supportant une boucle de ceinture de sécurité. Ce bras peut être poussé depuis une position opérative inclinée à une position inopérative horizontale.

L'invention a pour objet de fournir un dispositif de sécurité qui remédie à cet inconvénient en empêchant de boucler la ceinture de sécurité du siège tant que celui-ci n'est pas calé par rapport à son piètement.

A cet effet, le dispositif selon l'invention comprend un volet d'occultation de l'ouverture de la gâche, apte à occuper une position d'occultation, dans laquelle il s'oppose à l'engagement du pêne dans la gâche, et une position de dégagement, dans laquelle il permet cet engagement, ce volet étant articulé sur le flanc de l'assise portant la gâche par un axe transversal traversant dont le mouvement de rotation est commandé par le levier de commande du déverrouillage de la structure d'assise, sous le contrôle de moyens ne tolérant cette rotation que dans les positions angulaires dans lesquelles la structure de siège peut être verrouillée par rapport au piètement.

Ainsi, quand le passager actionne le levier de commande de déverrouillage avec l'intention de faire pivoter le siège, le déplacement du levier amène le volet de sécurité en position d'occultation de l'ouverture de la gâche jusqu'à ce que les moyens de verrouillage calent la structure de siège dans son autre position. Il en résulte que, si la rotation du siège est arrêtée dans une position intermédiaire, le pêne de la ceinture ne peut pas être engagé dans la gâche du siège, ce qui oblige le passager à poursuivre le mouvement jusqu'au verrouillage.

De manière inverse, si le passager est lié au siège par la ceinture, et qu'il actionne le levier de déverrouillage pour faire pivoter le siège, le volet d'occultation de la gâche vient buter sur le pêne engagé dans la gâche et limite la course du levier en empêchant ainsi tout déverrouillage, ce qui génère un effet dissuasif signifiant au passager qu'il vaut mieux faire pivoter le siège, ceinture enlevée et véhicule à l'arrêt.

Dans une forme d'exécution, le volet d'occultation est constitué par l'extrémité libre coudée vers l'extérieur d'un levier sensiblement vertical, dont l'autre extrémité est liée à un axe horizontal pivotant dans le flanc de la structure d'assise, axe dont l'autre extrémité, saillant dans la structure d'assise, est solidaire de l'une des extrémités d'un levier interne, dont l'autre extrémité est reliée par une tringle au levier de commande de déverrouillage.

Il ressort de cette description que les moyens d'actionnement du volet d'occultation sont peu complexes et peuvent être aisément montés sur la structure d'assise de tout siège rotatif par rapport à son piètement.

Dans une forme d'exécution, les moyens de contrôle de la rotation du levier de commande de déverrouillage comprennent :
- sur ce levier de déverrouillage, un doigt de contrôle parallèle à l'axe vertical de rotation du levier sur la structure d'assise et disposé en arrière de cet axe pour être soumis en permanence à un couple de pivotement vers l'extérieur par les moyens de rappel du levier agissant sur lui, en avant de son axe d'articulation,
- et, sur le piètement, des guides semi circulaires fixés sur ce piètement avec ménagement entre leurs extrémités de couloirs radiaux, lesdits couloirs étant positionnés angulairement pour tolérer le libre mouvement des moyens de verrouillage, uniquement dans les zones de verrouillage, ces guides présentant des portées circulaires internes, coaxiales à l'axe de rotation du siège et aptes à recevoir l'appui du doigt de contrôle du levier, sous l'action des moyens de rappel du levier, et empêcher la complète rotation dudit levier tant que le doigt n'est pas en vis-à-vis de l'un des couloirs entre guides.

Avec ce mécanisme de contrôle, le levier de déverrouillage est opérationnel pour chacune des deux positions de calage de la structure d'assise du siège, mais par contre, est inopérant pour toutes les positions intermédiaires de la structure d'assise, entre ses deux positions de calage, c'est-à-dire maintient le volet en position d'occultation de la gâche par la ceinture de sécurité, et maintient le verrou en position déverrouillée.

Grâce à cela, le volet d'occultation reste en position d'occultation de la gâche tant que la structure d'assise n'est pas parvenue dans sa position de calage et indique ainsi, au passager, qu'il convient de poursuivre la manoeuvre rotative du siège jusqu'à ce que l'assise parvienne dans cette position.

L'invention sera mieux comprise à l'aide de la description qui suit en référence au dessin schématique annexé représentant, à titre d'exemple, une forme d'exécution du dispositif de sécurité selon l'invention, dans le cas de son application à u siège amovible avec assise rotative, blocable dans deux positions inverses, à savoir face à la route et dos à la route.
Figure 1 est une vue en perspective de la structure générale du siège,
Figures 2 et 3 sont des vues partielles, en perspective, de la structure d'assise, lorsqu'elle est posée sur le piètement avec ses moyens de verrouillage, respectivement en position de verrouillage et en position de déverrouillage,
Figures 4 et 5 sont des vues partielles en perspective des seuls moyens de contrôle du déverrouillage, lorsqu'ils sont respectivement en position de contrôle et en position de déverrouillage,
Figure 6 est une vue en coupe verticale du piètement de la structure d'assise passant transversalement par les moyens de verrouillage.

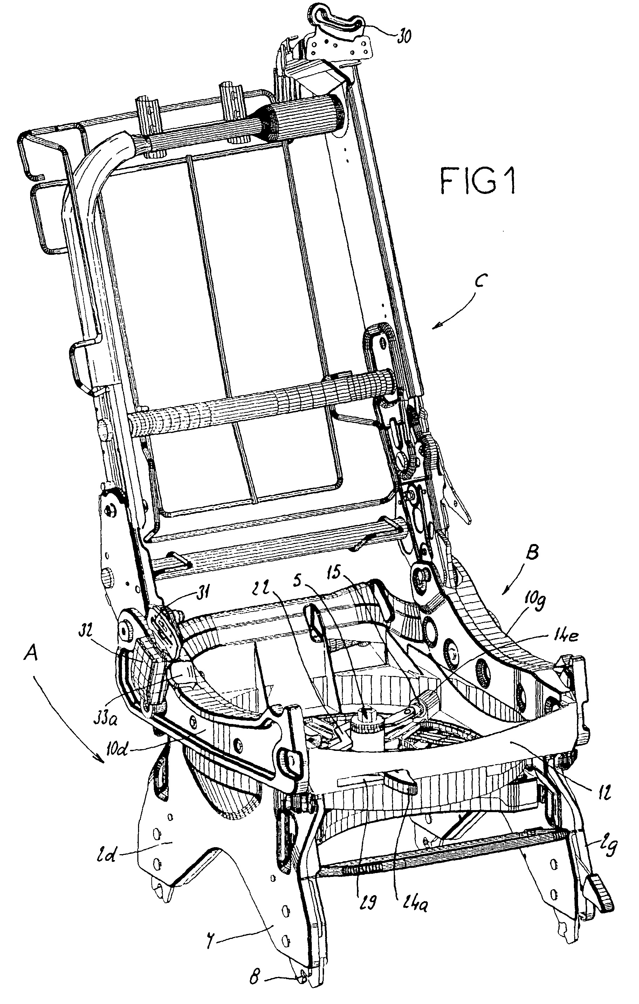

Comme montré, de manière générale, à la figure 1, le siège comprend un piètement A sur lequel est montée la structure d'assise B constituant, avec une structure de dossier C, l'armature d'un siège.

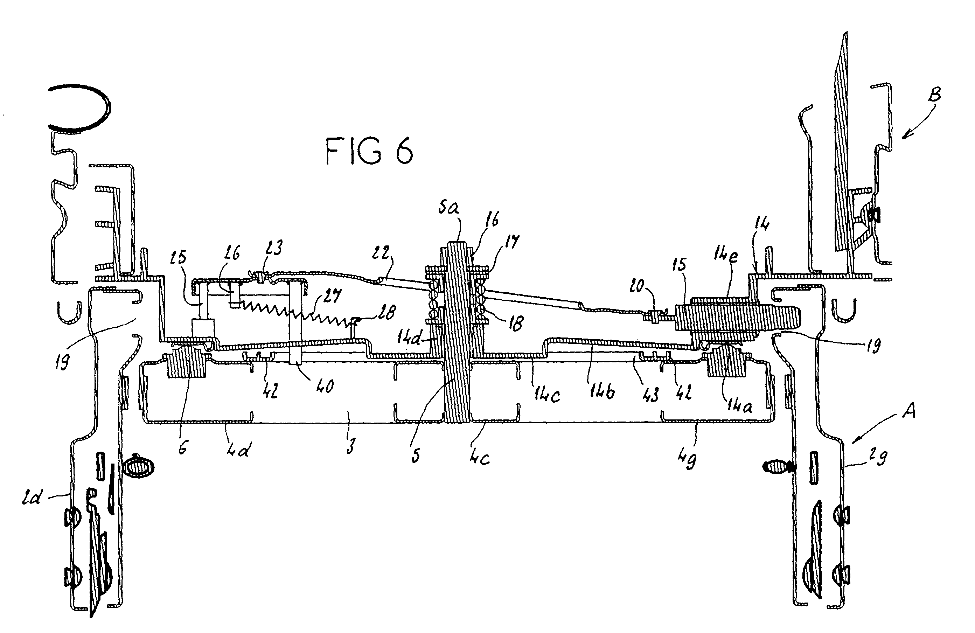

Comme montré plus en détails aux figures 1 et 6, le piètement A est composé de deux jambages 2g, 2d, reliés par des traverses 3 supportant avec des ferrures 4g, 4d et 4c d'une part, un pivot vertical 5, et d'autre part, une couronne périphérique 6. S'agissant d'un siège amovible, chaque jambage 2d, 2g comprend deux pieds 7 (figure 1) équipés chacun d'organes d'ancrage 8 aptes à coopérer avec des organes complémentaires disposés soit directement dans le plancher du véhicule, soit sur des coulisseaux déplaçables dans des glissières fixées sur le plancher du véhicule.

La structure d'assise B est composée de deux flancs 10g, 10d reliés l'un à l'autre par des traverses avant 12 et arrière 13 et par une pièce moulée 14. Cette dernière présente une portée 14a en forme de couronne reliée par des bras radiaux 14b à une platine centrale 14c équipée d'un moyeu axial 14d. Cette pièce comporte également, au moins, un palier radial 14e apte à servir au guidage d'un verrou cylindrique 15. La figure 6 montre bien que la partie 14a en forme de couronne de la pièce 14 repose sur la couronne 6 du piètement et que le moyeu 14d est traversé par le pivot 5. La liaison de la structure d'assise avec le piètement est assurée par un écrou 16 se vissant sur l'extrémité libre filetée 5a du pivot 5 en comprimant, par l'intermédiaire de rondelles 17, un ressort de confort 18.

La figure 6 montre également que l'extrémité libre du verrou 15, qui est disposé vers l'extérieur par rapport au pivot 5, est destinée à coopérer avec un logement 19 ménagé dans chacun des jambages 2d, 2g du piètement. Ces deux logements sont disposés à 180° l'un de l'autre, de manière à assurer le positionnement et le calage du siège par rapport au piètement, soit face à la route, soit dos à la route.

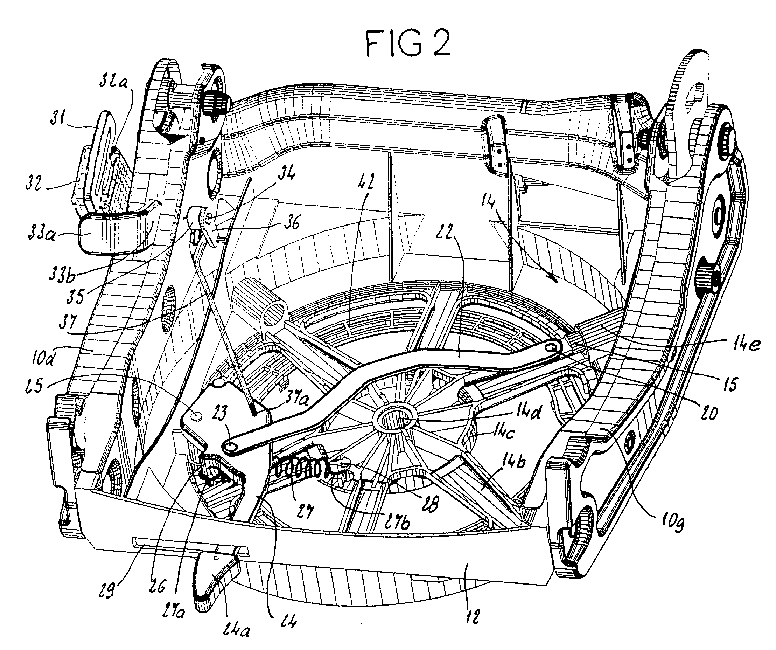

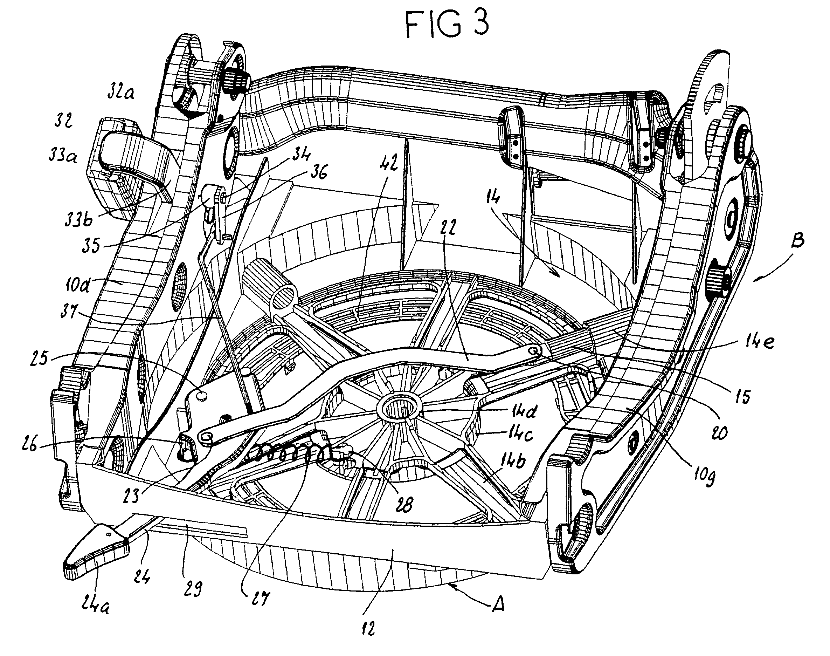

Les figures 2 et 3 montrent plus en détails que le verrou 15 est attelé par un axe 20 à l'une des extrémités d'une bielle 22 dont l'autre extrémité est attelée en 23 sur un levier 24 de commande de déverrouillage. Ce levier, qui est articulé autour d'un axe vertical 25 porté par la structure d'assise, s'étend vers l'avant pour recevoir l'articulation 23, mais aussi un doigt 26 saillant vers le bas et servant à l'accrochage de l'une des extrémités 27a d'un ressort de traction 27, accroché par son autre extrémité 27b sur un doigt 28 de la platine 14c. Le levier 24 s'étend au-delà de ces doigts et articulations pour traverser une lumière 29 ménagée dans la traverse avant 12 et pour recevoir, sur son extrémité libre, un enjoliveur 24a facilitant sa manipulation.

Lorsque le siège est en position verrouillée sur son piètement, ses moyens de verrouillage sont dans la position représentée aux figures 2 et 6, à savoir verrou 15 engagé dans un logement 19 du piètement 2g ou 2d et levier 24 à proximité du bord intérieur de la lumière 29.

La figure 1 montre que le siège est équipé d'une ceinture de sécurité dont la sangle, non représentée, est logée, avec son mécanisme de rappel, dans la structure de dossier C d'où elle sort par une boucle 30. Son pêne 31 coopère avec une gâche 32 fixée sur la structure d'assise, et par exemple sur le flanc 10d de celle-ci.

Le dispositif de sécurité selon l'invention comprend, comme montré plus en détails figures 2 et 3 et dans la zone d'implantation de la gâche 32, un volet 33a d'occultation de l'ouverture 32a de la gâche 32. Ce volet est constitué par l'extrémité recourbée vers l'extérieur d'un levier coudé dont la branche sensiblement verticale 33b est liée par son extrémité inférieure à l'extrémité extérieure d'un axe transversal et horizontal 34, monté libre en rotation dans un palier 35 faisant partie du flanc 10d de la structure d'assise. Par son extrémité intérieure à l'assise, l'axe 34 est solidaire de la partie supérieure d'un levier 36 dont l'extrémité inférieure est attelée à une tringle 37. Celle-ci s'étend dans la structure d'assise et, par son l'extrémité avant coudée verticalement vers le bas 37a, s'articule dans le levier 24, en avant de l'articulation 25 de celui-ci. Les calages, respectivement du volet 33a et du levier 36 sur l'axe 34, sont choisis de manière que, quand le levier de commande de déverrouillage 24 est en position de repos, correspondant au verrouillage du siège, le volet d'occultation dégage la gâche 32, comme montré à la figure 2, tandis que, lorsque ce levier 24 est en position de déverrouillage, comme montré à la figure 3, le volet 33a est en position d'occultation de la gâche 32 grâce au pivotement vers l'avant du levier 36.

Quand le pêne 31 de la ceinture de sécurité n'est pas dans sa gâche 32, tant que l'opérateur actionne le levier 24 de commande de déverrouillage dans le sens du déverrouillage, la structure d'assise B peut pivoter librement par rapport au piètement, mais le volet d'occultation 33a s'oppose à l'introduction du pêne 31 dans la gâche 32. Par contre, s'il relâche le levier 24, les moyens de rappel 27 ramènent ce levier en position de repos et permettent au volet de revenir dans sa position de dégagement de la gâche, ce qui est contraire au but recherché puisque ce relâchement peut s'effectuer sans que le pivotement du siège soit complet, c'est-à-dire sans qu'il soit dans une position verrouillée par le verrou 15.

On notera cependant que cette construction présente un intérêt puisque, si le passager sanglé sur le siège par la ceinture de sécurité décide de faire pivoter le siège et actionne le levier 24 de commande de déverrouillage, sa tentative se solde par un échec puisque le volet 33a, en venant buter contre le pêne 31, limite la rotation de l'arbre 34 et, par la tringle 37, la rotation du levier de commande 24, de sorte que ce dernier ne parvient pas à passer dans sa position angulaire de déverrouillage, faisant reculer le verrou 15 dans son palier 14e.

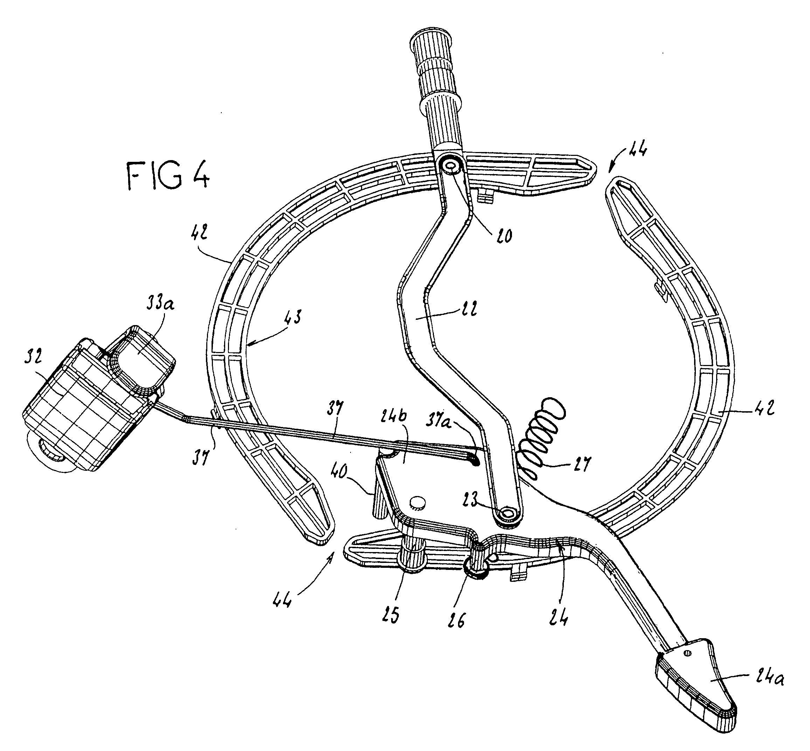

C'est donc pour éviter que les moyens de rappel 27 du levier de commande 24 provoquent inopinément le retour en position de repos du volet d'occultation 33a et le relâchement du levier de déverrouillage 24, que le dispositif est équipé de moyens de contrôle qui vont être décrits en référence aux figures 4 à 5.

Ces moyens de contrôle comprennent deux éléments, un doigt vertical 40 saillant vers le bas à partir d'un prolongement arrière 24b du levier 24 et deux guides semi circulaires 42 qui, comme le montre la figure 6, sont fixés sous la pièce moulée 14 de la structure d'assise B et sur le bord intérieur de la structure du piètement portant la couronne 6 et reliant les jambages 2d, 2g. Ces guides présentent des portées circulaires internes 43 qui sont coaxiales à l'axe du pivot 5 et contre lesquelles peut venir en appui le doigt de contrôle 40. En outre, ces deux guides ont des extrémités qui sont espacées pour former deux couloirs opposés 44 aptes à laisser passer le doigt de contrôle 40. Ces guides sont positionnés angulairement sur le piètement, de manière que leurs couloirs 44 laissent passer le doigt de contrôle 40 uniquement lorsque le verrou 15 est en coïncidence avec l'un des deux logements 19, ménagé pour le recevoir dans les jambages 2g, 2d de ce piètement.

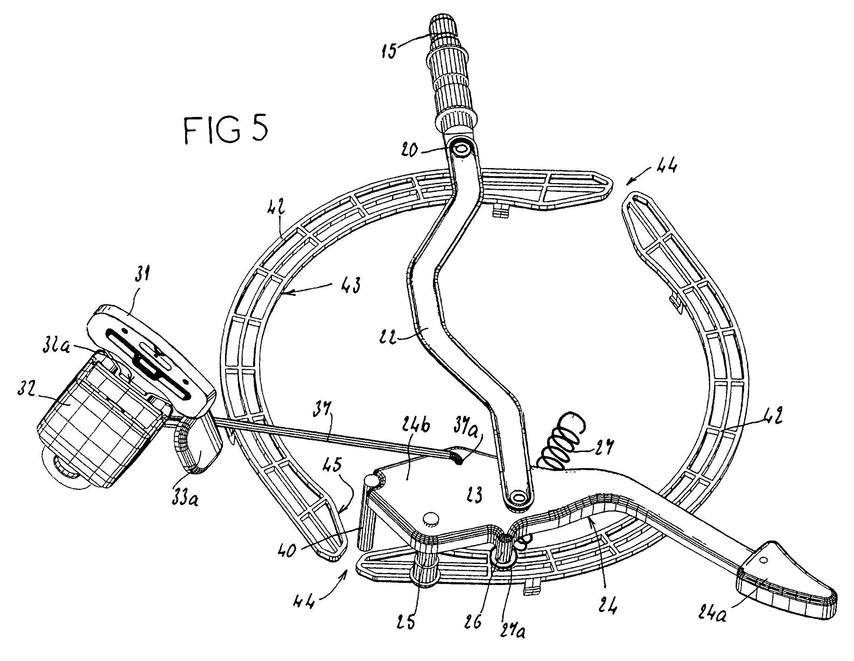

Avec ces moyens de contrôle, si le passager lâche le levier de commande 24 après l'avoir actionné dans le sens du déverrouillage, les moyens de rappel 27 de ce levier amènent le doigt de contrôle 40 en appui contre la portée circulaire 43 du guide correspondant, ce qui a pour conséquence, d'une part, de limiter la course de redressement du levier 24, et d'autre part, de le maintenir dans une position où par la tringle 27, il laisse le volet 33a dans sa position d'occultation de la gâche 32, comme montré à la figure 2. Si le passager arrête ici la rotation du siège, il ne peut pas fixer la ceinture de sécurité et, est donc alerté, qu'il doit terminer la rotation du siège pour pouvoir passer la ceinture de sécurité. S'il continue cette rotation, le doigt 40 parvient sur la fin de la portée circulaire 43, puis aborde une pente d'introduction 45, figure 5, qui le guide dans le couloir 44 correspondant. A partir de là, le mouvement de rappel du ressort 27 peut générer le couple de redressement du levier 24 et par la tringle 37 amener le volet 33a en position de dégagement.

Ce dispositif de sécurité, peu encombrant, est facilement insérable dans toute structure d'assise rotative par rapport à son piètement. Il fait appel à des moyens mécaniques simples et fiables dans le temps.

Il est évident que ce dispositif s'applique à tout siège pouvant pivoter par rapport à son piètement, que ce siège soit amovible ou fixe, et qu'il comporte un pêne de ceinture de sécurité disposé sur le flanc droit 10d de la structure d'assise ou sur le flanc gauche 10g.

## Revendications

1. Siège de véhicule comportant un dispositif de sécurité rotatif et calable dans au moins deux positions, dans lequel la structure d'assise (B) est montée libre en rotation autour d'un axe vertical et par rapport à un piètement et porte, d'une part et dans son fond, des moyens de verrouillage (15) aptes à la caler en rotation dans au moins deux positions opposées, respectivement, face à la route et dos à la route, et, d'autre part, et sur l'un de ses flancs (10d, 10g), une gâche (32) pour le pêne (31) d'une ceinture de sécurité intégrée portée par le siège, lesdits moyens de verrouillage (15) étant soumis à des moyens à ressort (27) les rappelant en position de verrouillage et étant reliés à un levier (24) de commande de déverrouillage articulé sous la structure d'assise (B), **caractérisé en ce qu'**il comprend un volet (33a) d'occultation de l'ouverture (32a) de la gâche (32), apte à occuper une position d'occultation, dans laquelle il s'oppose à l'engagement du pêne (31) dans la gâche, et une position de dégagement, dans laquelle il permet cet engagement, ce volet (33a) étant articulé sur le flanc (10d, 10g) de l'assise portant la gâche (32) par un axe (34), transversal et traversant, dont le mouvement de rotation est commandé par le levier (24) de commande du déverrouillage de la structure d'assise, sous le contrôle de moyens (40, 42) ne tolérant cette rotation que dans les positions angulaires dans lesquelles la structure de siège peut être verrouillée par rapport au piètement.

2. Siège selon la revendication 1, **caractérisé en ce que** le volet d'occultation (33a) est constitué par l'extrémité libre, coudée vers l'extérieur, d'un levier (33b) sensiblement vertical, dont l'autre extrémité est liée à un axe horizontal (34) pivotant dans le flanc (10d, 10g) de la structure d'assise (B), axe dont l'autre extrémité, saillant dans la structure d'assise, est solidaire de l'une des extrémités d'un levier interne (36) dont l'autre extrémité est reliée par une tringle (37) au levier (24) de commande de déverrouillage.

3. Siège selon la revendication 1, **caractérisé en ce que** les moyens de contrôle de la rotation du levier (24) de commande de déverrouillage comprennent :
- sur ce levier (24), un doigt de contrôle (40), parallèle à l'axe vertical de rotation (25) du levier (24) sur la structure d'assise (B) et disposé en arrière de cet axe (25) pour être soumis en permanence à un couple de pivotement vers l'extérieur par les moyens de rappel (27) du levier agissant sur lui, en avant de son axe d'articulation,
- et, sur le piètement (A), des guides semi circulaires (42) fixés sur ce piètement avec ménagement entre leurs extrémités de couloirs radiaux (44), lesdits couloirs (44) étant positionnés angulairement pour tolérer le libre mouvement des moyens de verrouillage (15), uniquement dans les zones de verrouillage, ces guides (42) présentant des portées circulaires internes (43), coaxiales à l'axe du pivot (5) du siège et aptes à recevoir l'appui du doigt de contrôle (40) du levier (24), par l'action des moyens de rappel (27) de ce levier, et à empêcher la complète rotation dudit levier (24), tant que le doigt (40) n'est pas en vis-à-vis de l'une des couloirs (44) entre guides (42).

## Patentansprüche

1. Drehbarer Fahrzeugsitz, der eine Sicherheitsvorrichtung aufweist und in mindestens zwei Stellungen feststellbar ist, bei dem der Sitzaufbau (B) um eine vertikale Achse sowie bezüglich eines Gestells frei drehbar gelagert ist und der ci nerseits und in seinem hinteren Teil Verriegelungsmittel (15) trägt, die ihn in mindestens zwei entgegengesctzten Stellungen, nämlich der Strasse zugewandt bzw. der strassc abgewandt, feststellen können, und der andererseits und auf einer seiner Seiten (10d, 10g) einen Schließhaken (32) für den Riegel (31) eines von dem Sitz getragenen integrierten Sicher heitsgurtes trägt, wobei die Verriegelungsmittel (15) Federmitteln (27) ausgesetzt sind, welche sie in die Verriegelungsstellung zurückbringen und welche mit einem unter dem Sitzaufbau (B) angclenkten Entriegelungs - Steuerhebel (24) verbunden sind, **dadurch gekennzeichnet, dass** er eine Abdeckungsklappe (33a) für die Öffnung (32a) des Schließhakeus (32) aufweist, die eine Abdeckungsstellung einnehmen kann, in welcher sie dem Eingriff des Riegels (31) in den Schließhaken entgegenwirkt, und eine Freigabestellung einnehmen kann, in welcher sie diesen Eingriff gestattet, wobei die Klappe (33a) an der den Schließhaken (32) tragenden Seite (10d, 10g) der Sitzfläche mittels einer in Querrichtung verlaufenden und durchgehenden Achse (34) angelenkt ist, deren Drehbewegung über den Entriegelungs-Steuerhebel (24) des Sitzaufbaus unter der Einwirkung von Mitteln (40, 42) gesteuert wird, welche diese Drehung nur in winkelstellungen zulassen, bei denen der Sitzaufbau bezüglich des Gestells verriegelt werden kann.

2. Sitz nach Anspruch 1, **dadurch gekennzeichnet, dass** die Abdeckungsklappe (33a) durch das nach außen abgewinkelte freie Ende eines im wesentlichen vertikalen Hebels (33b) gebildet ist, dessen anderes Ende mit einer in der Seite (10d, 10g) des Sitzaufbaus (B) schwenkbaren horizontalen Achse verbunden ist, deren in den Sitzaufbau ragendes andere Ende mit einem der Enden eines inneren Hebels (36) einstückig ist, dessen anderes Ende über ein Gestänge (37) mit dem Entriegelungs-Steuerhebel (24) verbunden ist.

3. Sitz nach Anspruch 1, **dadurch gekennzeichnet, dass** die Mittel zum Einwirken auf die Drehung des Entriegelungs-Steuerhebels (24) aufweisen:
- auf dem Hebel (24) einen Steuerfinger (40), der parallel zur vertikalen Drehachse (25) des Uebels (24) auf dem Sitzaufbau (B) ist und hinter der Achse (25) angeordnet ist, um durch die Rückstellmittel (27) des auf ihn einwirkenden Hebels vor seiner Drehachse ständig einem Schwenkmoment nach hinten ausgesetzt zu sein; und
- auf dem Gestell (A) halbkreisförmige Führungen (42), die auf dem Gestell befestigt sind, mit zwischen ihren Enden eingearbeiteten radialen Gängen (44), die winkelmäßig angeordnet sind, um die freie Bewegung der Verriegelungsmittel (15) nur in den Verriegelungsbereichen zu gestatten, wobei die Führungen (42) kreisförmige innere Auflagen (43) haben, die zur Achse des Drehpunktes (5) des Sitzes (5) koaxial sind und die Abstützung des Steuerfingers (40) des Hebels (24) durch die Wirkung der Rückstellmittel (27) des Hebels aufnehmen sowie die vollständige Drehung des Hebels (24) verhindern können, solange sich der Finger (40) nicht gegenüber von einem der Gänge (44) zwischen den Führungen (42) befindet.

## Claims

1. Vehicle seat having a rotary safety device which is capable of being clamped in at least two positions and in which the seating structure (B) is mounted so as to be free in rotation about a vertical spindle and in relation to a base and carries, one the one hand and in its bottom, locking means (15) capable of clamping it in rotation in at least two opposite positions, facing the road and facing away from the road respectively, and, on the other hand and on one of its sides (10d, 10g), a catch (32) for the latch (31) of an integrated safety belt carried by the seat, the said locking means (15) being subject to spring-type means (27) which bring them back into the locking position, and being connected to a lever (24) for controlling unlocking, which is articulated under the seating structure (B), **characterised in that** it comprises a flap (33a) for concealing the aperture (32a) of the catch (32), which flap is capable of occupying a concealing position in which it opposes the engagement of the latch (31) in said catch, and a freeing position in which it permits the said engagement, the said flap (33a) being articulated on the side (10d, 10g) of the seating carrying the catch (32) by a transverse and traversing spindle (34), the rotating movement of which is controlled by the lever (24) for controlling the unlocking of the seating structure, under the regulation of means (40, 42) which allow the said rotation only into angular positions in which the seat structure can be locked in relation to the base.

2. Seat according to claim 1, **characterised in that** the concealing flap (33a) is constituted by the free end, which is bent towards the outside, of a substantially vertical lever (33b) whose other end is linked to a horizontal spindle (34) pivoting in the side (10d, 10g) of the seating structure (B), of which spindle the other end, which projects into said seating structure, is integral with one of the ends of an internal lever (36) whose other end is connected by a rod (37) to the lever (24) for controlling unlocking.

3. Seat according to claim 1, **characterised in that** the means for regulating the rotation of the lever (24) for controlling unlocking comprise:
- on the said lever (24), a regulating finger (40), which is parallel to the vertical spindle (25) for the rotation of the lever (24) on the seating structure (B) and is disposed behind the said spindle (25) so as to be permanently subjected to an outward pivoting torque by the lever-returning means (27) which act on it in front of the spindle on which it is articulated;
- and, on the base (A), semicircular guides (42) which are fixed on the said base with radial passages (44) arranged between their ends, the said passages (44) being positioned angularly in order to allow the free movement of the locking means (15) solely in the locking zones, the said guides (42) having internal circular bearing surfaces (43) which are coaxial with the axis of the seat pivot (5) and are capable of being rested on by the regulating finger (40) of the lever (24), through the action of the means (27) for returning the said lever, and of preventing complete rotation of the said lever (24) as long as the finger (40) is not opposite one of the passages (44) between guides (42).
